# EUROPÄISCHE PATENTSCHRIFT

(11) **EP 1 314 354 B1**
(45) Veröffentlichungstag und Bekanntmachung des Hinweises auf die Patenterteilung: **27.09.2006**
(21) Anmeldenummer: 02090386.0
(22) Anmeldetag: 20.11.2002
(51) Int. Cl.: A01M 25/00

(54) **Köderstation für Nager, insbesondere für Ratten**
Rodent bait station, especially for rats
Station d'appât pour rongeur, spécialement pour les rats

(30) Priorität: 25.11.2001 DE 10159076
(43) Veröffentlichungstag der Anmeldung: 28.05.2003
(73) Patentinhaber: UrbanGuard GmbH, 13465 Berlin (DE)
(72) Erfinder: Wiesener, Bernd, 13465 Berlin (DE); Wiesener, Mark, 14059 Berlin (DE); Wiesener, Robert, 16540 Hohen Neuendorf (DE)
(74) Vertreter: Hoffmann, Klaus-Dieter

(56) Entgegenhaltungen:
- FR-A- 1 463 757
- FR-A- 2 564 287
- US-A- 2 710 485

## Beschreibung

Die Erfindung betrifft eine gehäuseartige Köderstation für Nager, insbesondere für Ratten.

Bei einer aus der FR-A-1.463.757 bekannten gehäuseartigen Köderstationen für Nager, insbesondere für Ratten, erstreckt sich der Boden eines Gehäuses der Köderstation in deren Einsatzstellung durchgehend über den gesamten Gehäusegrundriß, so daß die Nager nach Eintritt in die Köderstation durch ein bodennahes Eintrittsloch, das durch Auftrennen von Perforationen in einer Außenwand gebildet sein kann, sich für gewöhnlich nur scheuartig auf dem glatten Gehäuseboden z.B. aus Kunststoff auf einer Lauffläche des Gehäusebodens zum Köder hin fortbewegen, wodurch die erforderliche Zeit für die Tilgungsmaßnahmen der Köderstation verhältnismäßig lang ist.

Die Erfindung geht von der Beobachtung aus, daß Nager, insbesondere die als intelligent geltenden Ratten, "lieber", m.a.W. scheuloser auf dem Boden der gewohnten Umgebung und somit häufig auch auf natürlichen Bodenarten laufen, als auf unbekannten und möglicherweise glatten Kunststoffböden.

Bekannt ist auch eine haubenförmige Köderstation für Nager, insbesondere für Ratten ( US-A-2,710,485), die eine umlaufende Außenwand, auf deren Oberkante ein Deckel abnehmbar aufgesetzt ist, aufweist und die unten offen ist, wobei sich von der unteren Kante des Innenmantels der Außenwand über deren Umfang im Abstand zueinander versetzte,trogartige Elemente einwärts erstrecken, die durch torbogenartige, sich bis zu Unterkante des Außenwand erstreckende Öffnungen in letzterer von einander getrennt sind. In Einsatzstellung dieser haubenartigen Köderstation können Nager ohne Unterbrechung von außen durch die torbogenartigen Öffnungen der Außenwsnd hindurch auf dem Erdboden in den von der Außenwand umfaßten Innenraum der haubenartigen Köderstation laufen und haben somit ungehinderten Zugang zu dem in den trogartigen Elementen befindlichen Köder.

Diese bekannte haubenartige Köderstation genügt jedoch insoweit nicht den erhöhten Anforderungen des heutigen Umweltschutzes, daß die haubenförmige Köderstation in ihrer Einsatzstellung von größeren Tieren, wie z.B. Füchsen oder Katzen ohne Schwierigkeit umgedreht werden kann, so daß auch diese Tiere dann unerwünscht Zugang zu dem giftigen Köder haben.

Der Erfindung liegt daher die Aufgabe zugrunde, eine gehäuseartige Köderstation für Nager, insbesondere für Ratten zur Verfügung zu stellen, bei der die Laufstreckenbereiche für die Nager im Gehäuse der Köderstation in deren Einsatzstellung schneller und ohne größere Scheu von den Nagern angenommen werden und mit der für eine erhebliche Verkürzung der erforderlichen Zeit für die Tilgungsmaßnahmen gesorgt wird.

Diese Aufgabe wird erfindungsgemäß durch die im Patentanspruch 1 beschriebene gehäuseartige Köderstation für Nager, insbesondere Ratten, gelöst.

Die innere und äußere Formgebung des Gehäuses der Köderstation ist beliebig wählbar. Das Gehäuse der Köderstation kann bevorzugt im Spritzguß- oder Tiefziehverfahren aus Kunststoff hergestellt sein oder aus Metall, insbesondere Leichtmetall bestehen. Das Gehäuse der Köderstation kann in deren Einsatzstellung im natürlichen Boden z.B. mit einem Erdanker lösbar und sicher verankert werden.

Die erfindungsgemäße Köderstation wird in der Einsatzstellung durch die Anbietung der Laufstreckenbereiche im Gehäuse der Köderstation auf für die Nager, insbesondere Ratten, gewohntem Boden von diesen schneller und ohne größere Scheu angenommen, wodurch die Tilgungsmaßnahmen sich erheblich verkürzen und die Effizienz der Köderstation beträchtlich gesteigert wird.

Beispielhafte Ausführungsformen der erfindungsgemäßen Köderstation werden nun anhand der Zeichnungen beschrieben. In diesen sind:
**Fig. 1** eine schematische perspektivische Ansicht, gesehen von rechts oben, eines boxartigen Gehäuses der Köderstation für Nager, insbesondere Ratten, mit geöffnetem Deckel,
**Fig. 2** eine schematische Grundrißansicht des zur Veranschaulichung in der Ebene abgewickelten boxartigen Gehäuses der Köderstation für Nager, insbesondere für Ratten, und
**Fig. 3** eine schematische Grundrißansicht des Gehäusebodens einer anderen Ausführungsform der Köderstation (aber nicht gemäß der Erfindung) mit im Vergleich zu Fig. 2 unterschiedlicher Gestaltung des Laufstreckenbereiches und des Köderbereiches.

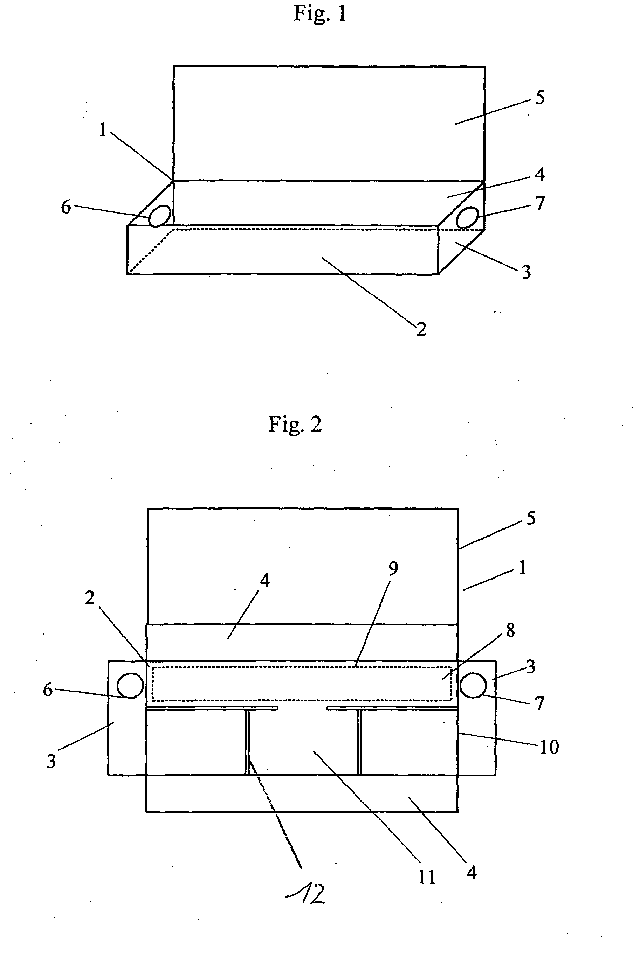

Wie aus Fig. 1, die eine schematische perspektivische Ansicht eines boxartigen Gehäuses 1 der Köderstation, gesehen von rechts oben, zeigt, sowie aus Fig. 2 hervorgeht, die zur Veranschaulichung schematisch den Grundriß des in der Ebene abgewickelten boxartigen Gehäuses 1 der Köderstation wiedergibt, weist das boxartige Gehäuse Außenwände 3 und 4, einen Gehäuseboden 2 und einen Deckel 5 auf. In den Außenwänden 3 ist in Nähe des Gehäusebodens 2 ein Eintrittsloch 6 bzw. ein Austrittsloch 7 vorgesehen, zwischen denen sich eine einen Laufstreckenbereich darstellende Zone 8 des Gehäusebodens 2 erstreckt, die über eine Perforierung in dem Gehäuseboden 2 gehaltert und aus diesem heraustrennbar ist. Der übrige, sich zu der heraustrennbaren Zone 8 parallel erstreckende Teil 9 des Bodens 2 umfaßt Köderanbietungs- und Köderrückhaltungsbereiche 10 bzw. 11, die durch Innenwandelemente 12 gegeneinander und zum Laufstreckenbereich hin abgeteilt sind und von diesem aus für die Nager sowie bei Abnahme des Deckels 5 des boxartigen Gehäuses 1 von oben aus für die Bedienungsperson zugänglich sind. In Einsatzstellung der Köderstation ist die dem Laufstreckenbereich für die Nager entsprechende Zone 8 des Gehäusebodens 2 des Gehäuses 1 der Köderstation aus dem Gehäuseboden 2 herausgetrennt und der Laufstreckenbereich wird von dem Boden der Umwelt des Einsatzortes der Köderstation, z.B. von dem natürlichen Erdboden gebildet. Hierdurch ist gewährleistet, daß Nager, die durch das Ein- oder das Austrittsloch 6 bzw. 7 in das Gehäuse 1 laufen, ohne Scheu ihren Weg in Richtung des Köderanbietungsbereiches 10 fortsetzen, da den Nagern die Laufstrecke auf gewohntem Boden im Gehäuse 1 angeboten wird.

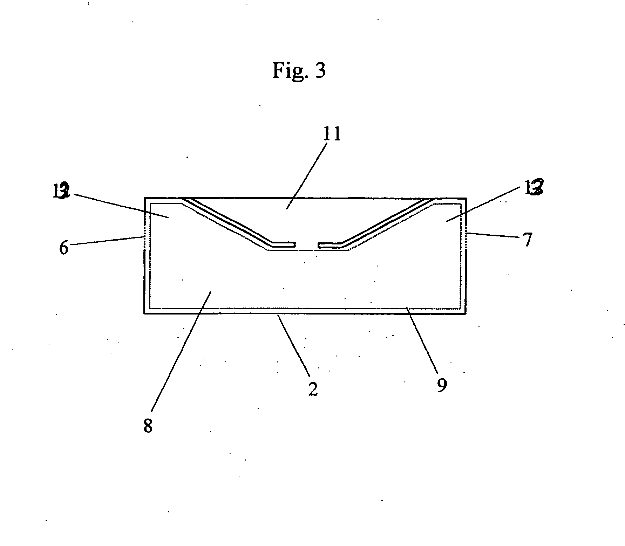

Fig. 3 zeigt schematisch im Grundriß den Gehäuseboden 2 des *boxartigen* Gehäuses 1 einer anderen Ausführungsform der Köderstation, aber nicht gemäß der Erfindung, mit einer abgeänderten Zueinanderordnung der aus dem Gehäuseboden 2 heraustrennbaren Zonen 8, die dem Laufstreckenbereich in Einsatzstellung der Köderstation entsprechen, und des Köderanbietungsbereiches 11 der Köderstation, wobei das Eintrittsloch 6 und das Austrittsloch 7 gegegenüberliegend in Eckbereichen 13 des Gehäuses 1 zueinander verdeckt in Bodennähe angeordnet sind.

## Patentansprüche

1. Gehäuseartige Köderstation für Nager, insbesondere für Ratten, mit einem Außenwände (3, 4), einen Gehäuseboden (2) und einen Deckel (5) aufweisenden boxartigen Gehäuse (1), mit in den Außenwänden (3) vorgesehenen Ein- und Austrittslöchern (6 bzw. 7) in Bodennähe mit Laufstreckenbereichen für die Nager, die sich im Gehäuse (1) zwischen den Ein- und Austrittslöchern (6 bzw. 7) erstrecken, wobei die Zonen (8) des Gehäusebodens (2) der Köderstation den Laufstreckenbereichen für die Nager entsprechen, entlang Perforierungen, Materialverdünnungslinien, an Sollbruchstellen oder Teilungssegmenten (9) im Gehäuseboden (2) gehaltert und aus diesem heraustrennbar sind, und mit Köderanbietungs- und Köderrückhaltungsbereichen (10 bzw. 11), wobei in Einsatzstellung der Köderstation die den Laufstreckenbereichen für die Nager entsprechenden Zonen (8) des Gehäusebodens (2) der Köderstation herausgetrennt sind und die Laufstreckenbereiche für die Nager im Gehäuse (1) der Köderstation auf dem Boden der Umgebung des Einsatzortes der Köderstation verlaufen, so daß Nagern, die durch das Ein-oder Austrittsloch (6 bzw. 7) in das Gehäuse (1) laufen und ihren Weg in Richtung des Köderanbietungsbereiches (10) fortsetzen, die Laufstrecke auf gewohntem Boden, dem Boden der Umwelt des Einsatzortes der Köderstation, im Gehäuse (1) angeboten wird.

## Claims

1. A house-type baited trap for rodents, particularly rats, with a box-like housing (1) having outer walls (3, 4), a housing base (2), and a lid (5), with entry and exit holes (6 and 7) provided in the outer walls (3) close to the base, with path areas for the rodents that extend in the housing (1) between the entry and exit holes (6 and 7), wherein the zones (8) of the housing base (2) of the baited trap correspond to the path areas for the rodents, are supported along perforations, material weakening lines, at predefined breaking points or partitioning segments (9) in the housing base (2) and are able to be removed therefrom, and with areas where bait is offered and areas where bait is withheld (10 and 11), wherein when the baited trap is set up for operation the zones (8) of the housing base (2) corresponding to the path areas for the rodents are detached from the baited trap and the path areas for the rodents in the housing (1) of the baited trap extend along the ground of the surroundings of the installation site of the trap, so that rodents entering the housing (1) through the entry or exit hole (6 and 7) and continuing towards the area where bait is offered (10) walk on a familiar path that resembles the ground of the area surrounding the installation site of the baited trap.

## Revendications

1. Station d'appât en forme de coffret pour rongeurs, en particulier pour rats, avec un coffret (1) ressemblant à une boîte, présentant des parois externes (3, 4), un fond de coffret (2) et un couvercle (5), avec des trous de sortie et d'entrée (6 respectivement 7) prévus dans les parois externes (3) à proximité du fond, avec des zones de course pour les rats qui s'étendent entre les trous d'entrée et de sortie (6 respectivement 7) dans le coffret (1), les zones (8) du fond de coffret (2) de la station d'appât correspondant aux zones de course pour les rongeurs, le long de perforations, des lignes d'amincissement de matériau étant maintenues à des points de rupture théorique ou à des segments de séparation (9) dans le fond de coffret (2) et ces lignes pouvant en être séparées, et présentant des zones de retenue et d'offre d'appât (10 respectivement 11), en position d'emploi de la station d'appât, les zones (8) du fond de coffret (2) de la station d'appât, qui correspondent aux zones de course des rongeurs, étant séparées, et les zones de course pour les rongeurs s'étendant dans le coffret (1) de la station d'appât sur le sol de l'environnement du lieu d'emploi de la station d'appât , de sorte que des rongeurs qui se déplacent par le trou d'entrée ou de sortie (6 respectivement 7) dans le boîtier (1) et poursuivent leur chemin en direction de la zone d'offre d'appât (10) retrouvent le terrain de course sur un sol connu, le sol de l'environnement du lieu d'utilisation de la station d'appât, dans le coffret (1).
